(19) Europäisches Patentamt
European Patent Office
Office européen des brevets

(11) **EP 2 339 369 B1**

(12) **FASCICULE DE BREVET EUROPEEN**

(45) Date de publication et mention de la délivrance du brevet:
**05.08.2015 Bulletin 2015/32**

(51) Int Cl.:
**G01S 13/34** (2006.01)    *G01S 7/35* (2006.01)

(21) Numéro de dépôt: **10195272.9**

(22) Date de dépôt: **15.12.2010**

(54) **Procédé de détection radar, notamment pour des radars aéroportés mettant en oeuvre une fonction de détection et d'évitement d'obstacles**

Radarortungsverfahren insbesondere für Bordradargeräte zur Umsetzung einer Hinderniserfassungs- und -vermeidungsfunktion

Radar detection method, mainly for airborne radars implementing an obstacle-detection and avoidance function

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2009 FR 0906171**

(43) Date de publication de la demande:
**29.06.2011 Bulletin 2011/26**

(73) Titulaire: **THALES**
**92200 Neuilly-sur-Seine (FR)**

(72) Inventeurs:
• **Cornic, Pascal**
  **29820 Guilers (FR)**
• **Le Bihan, Patrick**
  **29870 Lannilis (FR)**
• **Kemkemian, Stéphane**
  **75014 Paris (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A1- 0 310 172    GB-A- 577 854**
**US-A- 3 728 724    US-A- 4 743 910**
**US-A- 5 374 903**

## Description

La présente invention concerne un procédé de détection radar, notamment pour les radars dans lesquels la forme d'onde est constituée d'une suite de rampes de fréquence et où le temps de propagation aller-retour à une cible peut être supérieur à la durée d'une rampe élémentaire.

L'invention s'applique en particulier pour la fonction de détection et d'évitement d'obstacle encore appelée « Sense & Avoid » équipant des aéronefs.

La réalisation d'une fonction radar de détection d'obstacles aériens non coopérative pour aéronefs, en particulier pour des drones, est essentielle pour permettre l'insertion d'aéronefs autopilotés dans le domaine aérien non ségrégué. Elle participe à la fonction de détection et d'évitement d'obstacles connue sous le nom de « Sense and Avoid ».

Le domaine d'application de l'invention est notamment celui des radars de courte et moyenne portée, ne nécessitant pas une grande surface d'antenne, mais nécessitant une très bonne précision angulaire. Ceci est le cas en particulier des radars destinés à la fonction « Sense & Avoid ».

Certains problèmes rencontrés pour la réalisation de radar de type « Sense & Avoid » peuvent se rencontrer dans d'autres contextes dans la mesure où les contraintes pesant sur la définition du radar sont analogues.

On considère pour les applications concernées des architectures radar à émission et réception simultanées et continues, permettant d'exploiter au mieux la puissance moyenne disponible au niveau des amplificateurs de puissance à état solide, notamment selon les solutions exposées dans les demandes de brevets français dont les numéros de dépôt sont FR 09 03799 et FR 09 04394.

Un problème à résoudre est la définition d'une forme d'onde continue et d'un traitement de détection associé permettant à la fois :

- un traitement non ambigu dans le domaine Doppler ;
- un domaine distance instrumenté important ;
- un rendement maximal de la forme d'onde ;
- une résolution distance suffisante pour permettre de limiter la dynamique du signal reçu sur le fouillis de sol, de filtrer les échos de pluie à distance proche et de réduire l'impact des fuites d'émission et de réception sur la sensibilité du radar.

Un document US 4 743 910 A décrit un radar à compression d'impulsions éliminant des échos fixes.

Un document GB 577 854 A décrit un dispositif de mesures de distances d'obstacles par ondes hyperfréquence.

Les solutions généralement mises en oeuvre pour une telle problématique consistent à utiliser des formes d'onde modulées linéairement sous forme de rampe de fréquence, de type FMCW. Il est également possible de prévoir des intervalles de temps entre les rampes.

De façon classique, le traitement des mesures de distance, en réception, consiste pour chaque rampe à démoduler le signal reçu par l'image du signal émis, à échantillonner le signal ainsi démodulé, puis à effectuer une transformée de Fourier numérique sur le signal échantillonné. Cette première étape permet de séparer les cibles dans le domaine distance. Une deuxième transformée de Fourier effectuée de rampe à rampe permet de séparer les cibles par traitement Doppler dans le domaine vitesse. Pour pouvoir utiliser une telle forme d'onde, la portée instrumentée du radar doit être telle qu'à la distance maximum détectable le retard de propagation aller-retour de l'onde émise soit très inférieur à la durée d'une rampe. La rampe de réception est alors pratiquement en coïncidence avec la rampe d'émission. Dans ce cas, le rendement de la forme d'onde est voisin de 1 et quasi-totalité de la puissance d'émission disponible peut être utilisée pour assurer le bilan de portée du radar.

En revanche, lorsque le retard de propagation aller-retour est plus important que la durée d'une récurrence, le rendement de forme d'onde n'est plus assuré. C'est typiquement le cas pour des radars mettant en oeuvre la fonction « Sense & Avoid ». En particulier, dans ce cas deux contraintes antagonistes apparaissent. Il est en effet impossible d'optimiser simultanément le rendement de la forme d'onde du radar et de minimiser le bruit lié à la fuite d'émission.

Un but de l'invention est notamment de surmonter cet antagonisme. Un objet de l'invention est notamment un traitement et paramétrage particulier de la forme d'onde radar pour permettre un fonctionnement sans pertes quel que soit le retard entre la rampe émise et la rampe de démodulation.

A cet effet, l'invention a pour objet, un procédé de détection radar à émission continue, le retard de propagation pour une cible utile située à la portée radar maximum étant supérieur à la durée d'une rampe élémentaire, ledit procédé comporte au moins les étapes suivantes :

- générer un signal continu modulé en fréquence, une séquence d'émission étant formée de rampes successives et contigües, d'excursion $\Delta F$ et la durée $T_r$, centrées sur une fréquence porteuse $F_1$, la bande d'excursion $\Delta F$ et la durée $T_r$ étant fixés de façon à ce qu'en limite de portée, la rampe reçue apparaisse décalée d'au moins une fréquence donnée par rapport à la rampe émise ; ;

- recevoir simultanément et de façon continue d'au moins une cible un écho correspondant au signal émis, retardé d'un temps de propagation aller-retour à ladite cible $kTr + \theta$, $k$ étant un nombre entier et $\theta$ une durée inférieure à $Tr$ ;
- démoduler le signal reçu par le signal émis, le signal résultant étant composé pour chaque rampe d'émission d'un premier tronçon de sinusoïde à la fréquence $\delta Fdim = (1 - (\theta / Tr)).\Delta F$ et d'une deuxième sinusoïde à la fréquence $\delta Fd = (\theta /Tr).\Delta F$ ;
- échantillonner à chaque rampe, de façon continue et en synchronisme avec le signal d'émission le signal résultant, le début et la fin de chaque séquence d'échantillonnage étant choisis respectivement au début et à la fin de chaque rampe d'émission ;
- effectuer une première transformée de Fourier numérique, dite FFT, sur l'axe distance sur ledit signal résultant, à chaque séquence correspondant à la durée d'une rampe d'émission ;
- effectuer la somme vectorielle des deux raies apparaissant auxfréquences $\delta Fd$ et $\delta Fdim$ en sortie de la FFT, après remise en phase de l'une par rapport à l'autre ;
- effectuer une détection en comparant le module de la somme vectorielle avec un seuil prédéterminé.

Pour effectuer la somme des raies on effectue par exemple la somme cohérente des sorties des filtres distance de la FFT sur l'axe distance de rang $k$ et $k+N - \Delta F.Tr$, $N$ étant le nombre de points de la FFT sur l'axe distance.

La fréquence d'échantillonnage du signal reçu est choisie égale à la bande de modulation de la rampe d'émission $\Delta F$ pour que par repliement les deux raies apparaissent dans le même filtre distance $k$.

Le nombre de périodes parcourues par le signal d'émission est par exemple entier pendant la durée de ladite rampe d'émission $\Delta F$.

Dans un mode de mise en oeuvre particulier, le nombre de périodes parcourues par le signal d'émission étant entier pendant la durée de la rampe, et la fréquence d'échantillonnage étant égale à la bande de modulation de la rampe de fréquence, les deux sinusoïdes à la fréquence $\delta Fdim = (1 - (\theta / Tr)).\Delta F$ et à la fréquence $\delta Fd = (\theta Tr).\Delta F$ se somment après FFT sur l'axe distance de façon cohérente dans le même filtre de rang $k$, sans aucune opération complémentaire d'associatio, de remise en phase ni de sommation.

Une deuxième FFT Doppler de rampe à rampe est par exemple effectuée sur le signal reçu, après transformée de Fourier en distance, avant détection. Avantageusement, la démodulation du signal reçu par le signal émis s'effectue par exemple directement dans le domaine hyperfréquence.

La démodulation du signal reçu par le signal émis peut aussi s'effectuer dans le domaine numérique, après transposition en fréquence intermédiaire et après codage.

Une double démodulation du signal reçu est par exemple effectuée, une première démodulation par le signal émis et une deuxième démodulation par l'image du signal émis retardé, par exemple d'une demie rampe, de façon à éliminer les éclipses de cibles.

Une levée d'ambiguïté en distance est par exemple effectuée en répétant la séquence d'émission et de réception à l'aide d'une deuxième série de rampes, de durée élémentaire différente de $Tr$.

Dans un autre mode de mise en oeuvre, une levée d'ambiguïté en distance est effectuée en répétant la séquence d'émission et de réception à l'aide d'une deuxième série de rampes de durée élémentaire égale à $Tr$ centrées sur une fréquence porteuse $F2$ différente de la fréquence porteuse $F1$.

Le radar fonctionnant en bande X, la fréquence donnée est par exemple sensiblement égale à 1 MHz.

Avantageusement, le procédé peut être utilisé dans une fonction radar de détection et d'évitement d'obstacles, fonction dite « Sense & Avoid ».

L'invention a également pour objet un radar mettant en oeuvre un procédé de détection selon l'une quelconque des revendications précédentes, ce radar étant par exemple apte à équiper un aéronef.

D'autres caractéristiques et avantages de l'invention apparaîtront à l'aide de la description qui suit faite en regard de dessins annexés qui représentent :

- la figure 1, une onde d'émission en forme de rampes modulées linéairement en fréquence, chaque rampe correspondant à une récurrence ;
- la figure 2, la forme d'onde d'émission précédente et la forme d'onde d'écho en réception, dans le cas où le retard de propagation aller-retour est suffisamment faible pour que l'onde d'émission et de réception soient en quasi-coïncidence ;
- la figure 3, les deux formes d'onde précédentes dans le cas où le retard de propagation est plus important que la durée de récurrence ;
- la figure 4, les deux formes d'onde de la figure 3 montrant l'application d'une FFT sur une rampe d'émission ;
- la figure 5, le signal après démodulation synchrone d'une rampe d'émission formé de deux tronçons de sinusoïdes ;
- la figure 6, le spectre de fréquence en sortie d'une FFT correspondant au signal de la figure 5.

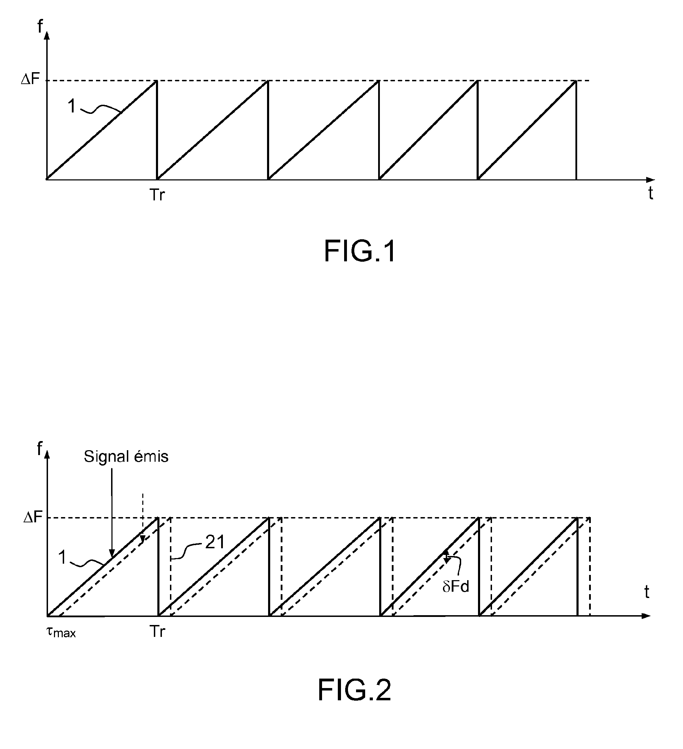

La figure 1 présente, dans un système d'axes où les abscisses représentent le temps $t$ et les ordonnées la fréquence f, une forme d'onde modulée linéairement sous forme de rampes de fréquence 1 d'amplitude, ou bande modulation, ∆F et de durée Tr. Une telle forme d'onde est classiquement appelée FMCW selon l'expression anglo-saxonne « Frequency Modulation Continuous Wave ».

De façon classique, le traitement des mesures de distance, en réception, consiste pour chaque rampe à démoduler le signal reçu par l'image du signal émis, à échantillonner le signal ainsi démodulé, puis à effectuer une transformée de Fourier numérique sur le signal échantillonné. Cette première étape permet de séparer les cibles dans le domaine distance. Une deuxième transformée de Fourier effectuée de rampe à rampe permet de séparer les cibles par traitement Doppler dans le domaine vitesse.

La figure 2 présente la forme d'onde 21 du signal reçu, en forme de rampes de fréquence, en regard de la forme d'onde du signal émis 1 de la figure 1. Les deux séries de rampe sont séparée d'un temps $\tau_{max}$ correspondant au temps de propagation aller-retour. Pour pouvoir utiliser une forme d'onde du type de la figure 1, la portée instrumentée du radar définie par la distance maximum atteignable $D_{max}$, doit être telle qu'à cette distance maximum $D_{max}$ le temps de propagation aller-retour $\tau_{max}$ = 2 $D_{max}$/c soit très inférieur à la durée de la rampe, conformément à l'exemple illustré par la figure 2. La rampe de réception 21 tombe alors en quasi-coïncidence avec la rampe émise 1.

Dans ces conditions, pour chacune des rampes, le signal utile est présent pendant un temps Tr - $\tau_{max}$ et rendement de la forme d'onde η est donné par la relation suivante :

$$\eta = (Tr - \tau_{max}) / Tr \qquad\qquad (1)$$

La première partie de la rampe reçue, comprise entre 0 et $\tau_{max}$, n'est pas exploitée pour la détection. Dans la mesure où le retard de propagation $\tau_{max}$ est faible devant la durée de récurrence Tr des rampes, le rendement de la forme d'onde est voisin de 1 et la quasi-totalité de la puissance disponible au niveau des amplificateurs de puissance peut être utilisée pour assurer le bilan de portée radar. Par ailleurs, aucune condition n'est imposée sur la cohérence de phase de l'oscillateur de référence du radar, de rampe à rampe.

Pour une cible à la distance D = c.$\tau$ / 2, la fréquence de battement δFd est donnée par la relation suivante :

$$\delta Fd = (\tau / Tr).\Delta F \qquad\qquad (2)$$

Cette fréquence croît donc linéairement avec la distance D et est maximum à la portée maximum $D_{max}$. Or, le bruit de phase porté par la fuite d'émission dans le récepteur du radar décroît en fonction de la fréquence f, en suivant une loi en $1/f^{\alpha}$, ce qui est équivalent ici à $1/D^{\alpha}$ pour $\alpha$ < 4. Par ailleurs, le bruit des mélangeurs de réception décroît en 1/f en fonction de la fréquence f, ou encore en 1 /D.

Ainsi, en choisissant correctement la bande et la pente de modulation, il est possible de fixer la fréquence de battement pour la portée maximum de façon à ce que ces bruits résiduels soient négligeables devant le bruit thermique à la portée maximum.

Ceci est possible à condition que la pureté spectrale de l'oscillateur de référence soit suffisante et que le découplage entre l'émission et la réception soit lui aussi suffisant. On considère qu'une fréquence de battement minimale de 1 MHz permet de remplir les conditions qui précèdent si les règles de conception et les circuits choisis sont au niveau de l'état de l'art. Dans ce cas, la détection s'effectue en contraste sur le bruit thermique, et la sensibilité du radar est maximale. Lorsque la distance diminue, la puissance de l'écho augmente en fonction de la distance D en suivant une loi en $1/D^4$ et croît plus rapidement que le bruit parasite en $1/D^{\alpha}$, ce qui permet de préserver la sensibilité du radar quelle que soit la distance.

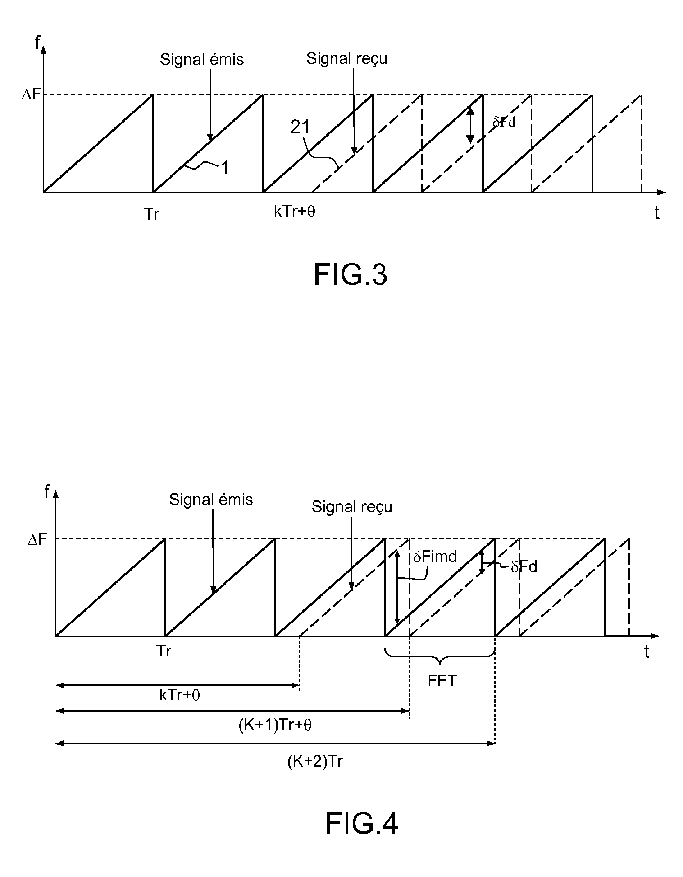

La figure 3 illustre un cas où le retard de propagation est plus important que la durée de récurrence Tr, le signal reçu 21 arrivant (kTr + θ) après le signal reçu, θ < Tr. En d'autres termes, la distance instrumentée correspondant à la distance aller-retour parcourue par l'onde radar est supérieure à c.Tr, c étant la vitesse de propagation de l'onde. En faisant abstraction du coefficient de vitesse c, on peut dire que la distance instrumentée est supérieure à la durée Tr d'une rampe élémentaire.

Dans l'exemple de la figure 3, le signal reçu 21 arrive après deux récurrences Tr, soit k = 2.

Le cas de la figure 3 est typiquement le cas pour le mode de détection sur cibles rapides, notamment pour la fonction « Sense & Avoid ». La condition de non ambiguïté Doppler sur le domaine fouillis de sol et cibles à vitesse de rapprochement maximum impose pour un radar en bande X une PRF, fréquence de répétition, supérieure ou égale à 33 kHz, soit une période de répétition inférieure ou égale à 30 $\mu$s. Dans le même temps, la portée est par exemple de 7 NM, correspondant à un retard de propagation de l'ordre de 86 μs, NM signifiant « Nautical Mile » utilsé couramment dans la littérature radar. Dans une telle configuration, une cible à distance maximum $D_{max}$ répond en ambiguïté de rang 3 et la rampe de réception peut être positionnée le long du domaine instrumenté avec un retard quelconque fonction de la distance de la cible.

Dans ces conditions, deux contraintes antagonistes apparaissent. Il est impossible en effet d'optimiser simultanément le rendement de la forme d'onde du radar et de minimiser le bruit lié à la fuite d'émission. En effet :

- lorsque les rampes d'émission et de réception tombent en coïncidence, c'est-à-dire pour un retard de propagation $\tau = kTr$, le rendement de forme d'onde est de 1, mais la fréquence de battement est nulle, ce qui rend le signal reçu indétectable car masqué par le bruit de fuite, il s'ensuit des éclipses périodiques en fonction de la distance, la longueur de ces éclipses étant fonction de la qualité de l'oscillateur de référence et du découplage entre l'émission et la réception ;
- lorsque les rampes d'émission 1 et de réception 21 sont décalées d'une demi-rampe, la fréquence de battement est maximum et égale à $\Delta F/2$ et donc généralement importante pour que le bruit de fuite soit considéré comme négligeable, mais le rendement de forme d'onde est alors minimum et vaut ½, ce qui correspond à une diminution de la portée de 16% par rapport à la situation idéale où le facteur de forme est de 1.

Par ailleurs, le radar est ambigu en distance.

Pour ces raisons, les formes d'onde FMCW ne sont habituellement pas utilisées quand le retard de propagation correspondant à la distance instrumentée maximum $D_{max}$ n'est pas négligeable devant la durée de la rampe.

Dans le cas où le retard de propagation est du même ordre de grandeur ou plus important que la durée de la récurrence, il est nécessaire d'adapter la forme d'onde et de modifier le traitement en réception pour tirer le meilleur parti de la puissance disponible et optimiser la sensibilité du radar en fonction de la distance, en particulier de la distance maximum.

La solution selon l'invention effectue notamment les étapes suivantes :

- génération d'un signal continu modulé en fréquence, constitué de rampes successives centrées sur une porteuse à une fréquence F1 ;
- fixation de la bande de modulation $\Delta F$ et de la durée de la récurrence Tr de façon à ce qu'en limite de portée $D_{max}$, la rampe reçue apparaisse décalée d'au moins 1 MHz par exemple par rapport à la rampe émise, du fait du retard de propagation ;
- démodulation du signal reçu par le signal émis, échantillonnage du signal résultant et calcul d'une FFT sur le résultat, à chaque récurrence correspondant à une rampe de fréquence, soit entre kTr et (k+1)Tr ;
- association dans le spectre résultant des raies apparaissant aux fréquences $\delta Fd = (\theta/Tr).\Delta F$ et $\delta Fdim = (1 - \theta/Tr).\Delta F$ ;
- calcul de la somme vectorielle de ces deux raies, après remise en phase de l'une par rapport à l'autre, cette opération étant à effectuer pour toutes les valeurs de $\theta$ ;
- calcul d'une détection en comparant le module du signal résultant à un seuil prédéterminé ;
- calcul de la mesure de distance ambiguë en estimant la phase du signal résultant ;
- on lève l'ambiguïté distance en répétant le même processus sur une porteuse F2 en comparant les phases reçues sur les signaux résultant à F1 et à F2, ceci pouvant être effectué de façon séquentielle ou en émission simultanée selon les principes d'émission colorée décrits notamment dans les demandes de brevets FR 09 03799 et FR 09 04394 précitées, dans ce cas une partie de l'antenne d'émission émettant sur la fréquence F1 pendant que l'autre partie émet sur la fréquence F2 ;
- éventuellement, si cela s'avère nécessaire, atténuation des éclipses en répétant séquentiellement l'ensemble du processus avec une deuxième forme d'onde de même bande de modulation mais utilisant une durée de rampe différente, dans le cas où l'agilité de fréquence étant utilisée conformément à la demande de brevet FR 09 04394, ces deux formes d'onde peuvent être générées de façon synchrone avec le changement de fréquence.

Une double démodulation du signal reçu 21 peut être effectuée de façon à éliminer les éclipses de cibles. Une première démodulation est effectuée par le signal émis et la deuxième est effectuée par l'image du signal émis, retardé par exemple d'une demi-rampe.

La figure 4 présente une suite de rampes 1 émises par un radar, conformément à la forme d'onde de la figure 1. Elle présente aussi le signal écho 21 obtenu après un retard de propagation pouvant être supérieur à la durée de la récurrence Tr comme dans le cas de la figure 3. Ce retard est égal à $(kTr + \theta)$, k étant un nombre entier positif.

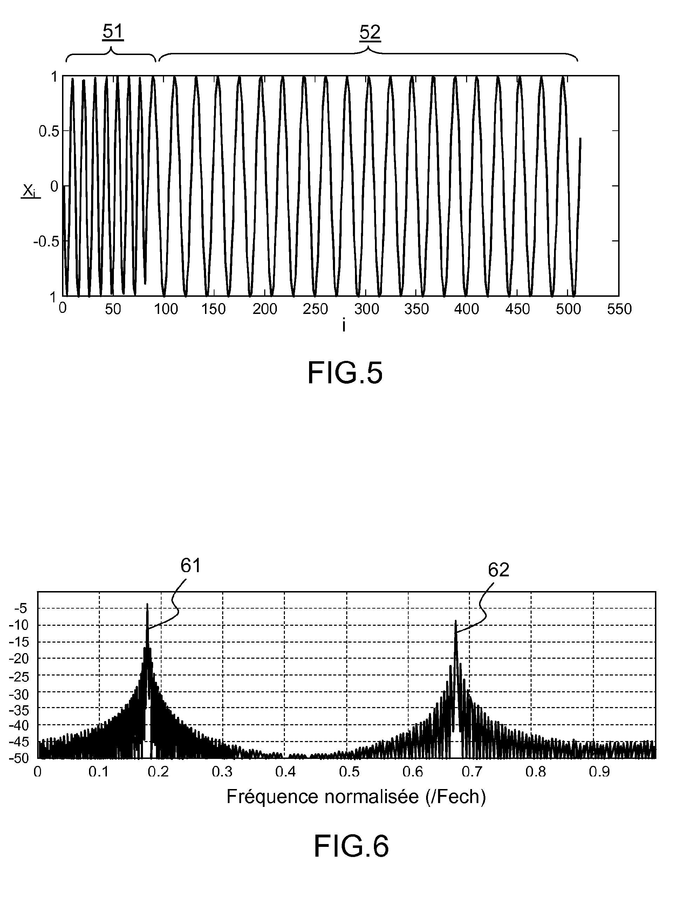

Dans une récurrence donnée, correspondant à la durée d'une rampe, le signal obtenu en réception après démodulation synchrone d'une rampe élémentaire d'émission est constitué de deux tronçons 51, 52 de sinusoïdes comme illustré par la figure 5, la première sinusoïde ayant une fréquence $f_1$ et la deuxième ayant une fréquence $f_2$.

En particulier, en se référant par exemple à la récurrence k+1, la rampe d'émission k+1 est démodulée avec la partie de la rampe de réception de la récurrence précédente coïncidant avec la récurrence d'émission k+1, la fréquence $f_1$ de la première sinusoïde 51 est alors égale à - δFdim, δFdim étant la fréquence de battement δFdim = (1 - θ / Tr). ΔF, image de la fréquence de battement δFd.

Puis la rampe d'émission k+1 est démodulée avec la partie de la rampe de réception suivante coïncidant avec la rampe d'émission k+1, la fréquence $f_2$ de la deuxième sinusoïde 52 est alors égale à δFd = (θ / Tr).ΔF.

Ainsi, pour les récurrences de rang supérieur à k, en choisissant l'origine des temps t = 0 au début de la récurrence en cours, la première sinusoïde $S_1(t)$ est présente entre l'instant t = 0 et l'instant t = θ. Elle s'écrit selon la relation suivante :

$$S_1(t) = \sin\left[-2\pi(\Delta F / Tr)(Tr - \theta).t + \varphi_1\right] \qquad (3)$$

où $\varphi_1$, est la phase à l'origine, donnée par la relation suivante :

$$\varphi_1 = 2\pi\left[f_0(Tr - \theta) + (\Delta F / 2Tr)(Tr - \theta)^2\right] \qquad (4)$$

$f_0$ étant la fréquence porteuse F1 précitée, sur laquelle est centrée la rampe.

La seconde sinusoïde $S_2(t)$ est présente entre l'instant t = θ et l'instant t = Tr. Elle s'écrit selon la relation suivante :

$$S_2(t) = \sin\left[2\pi(\Delta F / Tr).\theta.t + \varphi_2\right] \qquad (5)$$

où $\varphi_2$ est la phase à l'origine prise en t= θ, donnée par la relation suivante :

$$\varphi_2 = 2\pi(f_0.\theta + (\Delta F / 2Tr).\theta^2) \qquad (6)$$

Si on veut prendre en compte l'effet Doppler, il faut ajouter $2.V_r/\lambda$ à chacune des fréquences f, $V_r$ étant la vitesse Doppler et λ= c/f la longueur de l'onde émise.

La différence de phase entre les deux sinusoïdes 51, 52, $\Delta_\varphi = (\varphi_2 - (\varphi_1$, est donc :

$$\Delta\varphi = 2\pi\left[\left(f_0 + \frac{\Delta F}{2}\right)(T_r - 2\theta)\right] \qquad (7)$$

On remarque ici que si l'onde RF est continue en phase de rampe à rampe, ce qui revient à dire que cette onde décrit un nombre entier de périodes pendant la durée de la rampe, on a :

$$2\pi(f_0 + \frac{\Delta F}{2})Tr = 2p\pi \text{ , avec p entier} \qquad (7')$$

Il s'ensuit que

$$\Delta\varphi = -4\pi\left[\left(f_0 + \frac{\Delta F}{2}\right)\theta\right]\mod(2\pi) \qquad (7'')$$

ou encore

$$\Delta\varphi = -4\pi\frac{p}{Tr}\theta\mod(2\pi) \qquad (7''')$$

Dans le cas général, en prenant en compte l'effet Doppler, cette différence de phase devient :

$$\Delta\varphi = 2\pi\left[\left(f_0 + \frac{\Delta F}{2}\right)(T_r - 2\theta) + 2.\frac{V_r}{c}\left(f_0.Tr + \Delta F.(Tr - \theta)\right)\right] \quad (8)$$

Pour effectuer la transformée de Fourier rapide FFT, les signaux sont échantillonnés.

La fréquence d'échantillonnage $F_{ech}$ est égale à N/Tr, N étant un nombre entier.

En sortie de la FFT, en ne considérant que les fréquences positives, les deux signaux S1 et $S_2$ répondent respectivement dans les filtres :

- de rang k + N - ΔF.Tr ;
- et de rang k

conformément à la figure 6.

Cette figure 6 illustre le spectre de fréquences 61 obtenu en sortie de FFT avec les pics 61, 62 aux fréquences δFdim et δFd.

Les amplitudes respectives des signaux aux fréquences δFdim et δFd sont k/N et (N-k/N), et leur déphasage est Δφ.

Si on choisit une fréquence d'échantillonnage double de la bande de fréquence, soit $F_{ech}$ = 2ΔF, les raies 61, 62 apparaissent dans les filtres de rang k et k + N/2.

En déphasant la sortie du filtre FFT de rang k + N - ΔF.Tr de Δφ tel que défini par la relation (7), sans prise en compte du Doppler, et en effectuant la somme de ce signal déphasé avec la sortie du filtre de rang k, on réalise une somme cohérente des deux signaux, ce qui permet de restituer un filtrage adapté à la forme d'onde émise, quelle que soit le retard de propagation, et ainsi de maximiser le rapport signal sur bruit.

En présence de Doppler, cette opération peut être effectuée après FFT Doppler de rampe à rampe, après avoir compensé pour chaque filtre Doppler le retard correspondant à l'asynchronisme des deux tronçons de sinusoïdes 51, 52 reçus au sein d'une même rampe. Ceci s'effectue en déphasant à la sortie de chaque filtre Doppler, pour toutes les valeurs de k, le signal $S_2$ correspondant au deuxième tronçon de sinusoïde 52 par rapport au signal S1 correspondant au premier tronçon de sinusoïde 51. Ce déphasage est égal à $2\pi\dfrac{k.p}{M.N}$ où p correspond au rang du filtre FFT Doppler et M au nombre de points sur lesquels est effectuée la FFT Doppler.

L'exemple d'application présenté par la suite est adapté à la fonction « Sense & Avoid ».

Afin d'obtenir le maximum de sensibilité à longue portée, on cherche à obtenir une fréquence de battement supérieure à 1 MHz à longue distance, sur δFd=ΔFθ/Tr et δFdmin=ΔF(1-θ/Tr)

Par exemple, en choisissant une durée de rampe $Tr_1$=23,3 μs, on obtient à 7 NM un retard de propagation τ=3$Tr_1$+θ1.

Il s'ensuit que :

- θ1 =16,5 μs
- δFd = 0,7ΔF
- δFdim = 0,3ΔF

En choisissant ΔF=10 MHz, et Fech = 20 MHz, on obtient :

- δFd = 7 MHz
- δFdim = -3MHz

la détection s'effectue sur la somme cohérente des raies δFd et δFdim.

La raie à δFdim apporte une contribution plus importante que la raie à δFd à la détection.

Pour une distance telle que $θ_1$=$Tr_1$/2, soit 6,6 NM, les deux raies ont la même contribution énergétique et apparaissent à 5 MHz et -5 MHz En deçà de cette distance, la raie à δFd devient prépondérante et c'est elle qui permet principalement d'obtenir la détection.

Pour une distance inférieure à 5,9 NM, correspondant à retard de 72,23 μs, cas où $θ_1$<$Tr_1$/10, δFd devient inférieure à 1 MHz et la sensibilité est dégradée par la présence de bruit porté par la fuite d'émission dans la fenêtre de réception.

La raie « image δFdim est supérieure à 9 MHz mais n'est présente dans la fenêtre d'observation que pendant 10% du temps. Elle n'est donc pas exploitable pour la détection.

Pour une distance égale à 5,66 NM, δFd=δFdim=0. La détection est impossible car le signal est noyé dans la fuite d'émission.

La sensibilité est restaurée à la distance de 5,42 NM, correspondant à un retard de 67,5 $\mu$s. En effet à cette distance, $\theta_1$=21 $\mu$s, δFdim=1 MHz.

En généralisant le raisonnement, il apparaît que des éclipses périodiques apparaissent, situées entre (k-0,1)Tr1 et (k+0,1)Tr1, pour toutes valeurs de k supérieures ou égales à 1.

Pour éviter les éclipses, on peut utiliser une deuxième forme d'onde, identique à la première, mais dont la durée de rampe est différente.

La durée de cette deuxième rampe $Tr_2$ est choisie pour que les éclipses des deux formes d'ondes ne se trouvent jamais en coïncidence, quelle que soit la distance.

Par exemple, en prenant $Tr_2>Tr_1$, la condition de non coïncidence s'écrit :

$$Tr_2>1,2\ Tr_1.$$

Ce qui traduit le fait que la borne inférieure de l'éclipse sur $Tr_2$ doit être supérieure à la borne supérieure de l'éclipse sur $Tr_1$ pour k=2 et k=3.

Par exemple, une deuxième valeur de la durée de la rampe peut être fixée à $Tr_2$=25,7 $\mu$s.

La sensibilité radar est alors maximale quelle que soit la distance, sur au moins une des deux formes d'ondes.

Une autre façon d'éviter les éclipses est de réaliser la démodulation complexe du signal reçu à partir de l'image de la rampe d'émission, décalée temporellement.

En utilisant au moins deux rampes de démodulation décalées l'une par rapport à l'autre d'un temps égal à moitié de la durée de la rampe, on est certain que quelque soit la distance de la cible, le signal démodulé apparaît avec une fréquence suffisante (par exemple f>1 MHz) pour être situé hors éclipse sur au moins une des deux démodulations

Cette solution est avantageuse car les deux modulations peuvent être appliquées sur le signal reçu au cours d'une même récurrence, sans perte de temps de cycle ni de sensibilité de l'extracteur radar.

Elle est également intéressante dans la mesure où la bande de modulation ΔF peut dans ce cas être limitée à une valeur plus faible, par exemple 3 MHz, tout en garantissant en permanence une fréquence de signal démodulé supérieure à 1 MHz.

La mise en oeuvre de cette variante peut s'effectuer directement en hyperfréquence.

Dans ce cas deux générateurs de forme d'onde synchronisés et cohérents entre eux utilisant des circuits DDS sont utilisés.

La mise en oeuvre peut également s'effectuer en numérique, après transposition en fréquence intermédiaire et après codage.

Il est en effet possible avec les composants numériques disponibles sur le marché de générer un signal de démodulation synchrone et parfaitement cohérent du signal d'émission.

Le signal de démodulation est dans ce cas constitué à partir d'une suite de phases discrètes décrivant la même modulation que le signal de modulation utilisé pour l'émission, l'ensemble étant transposé en fréquence intermédiaire.

Dans ce dernier cas, la démodulation suivie de la transformée de Fourier correspond à une corrélation numérique analogue à une compression d'impulsion sur un signal Chirp.

Si une telle technique est utilisée, il est facile de lever les éclipses en réalisant deux démodulations à l'aide de deux rampes numériques décalées temporellement entre elles d'une demi rampe.

Avantageusement, l'invention permet d'augmenter la portée du radar, d'atténuer, voire de faire disparaître les éclipses liées aux ambiguïtés distance, tout en restant compatible avec les exigences de non ambiguïté Doppler.

De plus l'invention est facile à mettre en oeuvre et ne nécessite pas de moyens complémentaires vis-à-vis d'un radar de type FMCW classique. En particulier, le corrélateur est constitué simplement d'une démodulation, d'une FFT et d'une somme vectorielle pour chaque filtre FFT.

L'invention est également compatible avec les techniques d'émission colorée et d'agilité de fréquence et facilite la levée d'ambiguïté angle/distance et l'estimation de la distance décrite notamment dans la demande de brevet FR 09 04394, dans la mesure où la mesure primaire effectuée sur une porteuse unique donne accès à une estimation de la distance ambiguë. Enfin, la bande de modulation nécessaire reste faible.

Dans le cas particulier où l'onde RF est continue en phase de rampe à rampe et que la fréquence d'échantillonnage Fech est choisie égale à ΔF, le traitement peut se simplifier .

En sortie de la FFT, en ne considérant que les fréquences positives, les deux signaux $S_1$ et $S_2$ répondent respectivement dans les filtres :

- de rang k + N - ∆F.Tr ;
- et de rang k

avec ∆F.Tr =Fech Tr =N,

ce qui revient à dire que les deux signaux répondent dans le même filtre De plus, l'onde RF étant continue en phase, le signal démodulé est lui aussi continu en phase. Le signal après échantillonnage correspond à une sinusoïde sans rupture de phase sur la durée de la rampe. La FFT réalise alors l'intégration cohérente des N échantillons constituant la rampe et le rendement de la forme d'onde est égal à un quelle que soit la distance de la cible.

## Revendications

1. Procédé de détection radar à émission continue, **caractérisé en ce que** le retard de propagation pour une cible utile située à la portée radar maximum étant supérieur à la durée d'une rampe élémentaire, ledit procédé comporte au moins les étapes suivantes :

   - générer un signal continu modulé en fréquence, une séquence d'émission étant formée de rampes successives et contigües (1), d'excursion ∆F et la durée Tr, centrées sur une fréquence porteuse F1, la bande d'excursion ∆F et la durée Tr étant fixés de façon à ce qu'en limite de portée ($D_{max}$), la rampe reçue apparaisse décalée d'au moins une fréquence donnée par rapport à la rampe émise ;
   - recevoir simultanément et de façon continue d'au moins une cible un écho correspondant au signal émis, retardé d'un temps de propagation aller-retour à ladite cible kTr + θ, k étant un nombre entier et θ une durée inférieure à Tr ;
   - démoduler le signal reçu (21) par le signal émis (1), le signal résultant étant composé pour chaque rampe d'émission d'un premier tronçon de sinusoïde (51) à la fréquence δFdim = (1 - (θ /Tr)). ∆F et d'une deuxième sinusoïde (52) à la fréquence δFd = (θ /Tr).∆F ;
   - échantillonner à chaque rampe, de façon continue et en synchronisme avec le signal d'émission le signal résultant (51, 52), le début et la fin de chaque séquence d'échantillonnage étant choisis respectivement au début et à la fin de chaque rampe d'émission ;
   - effectuer une première transformée de Fourier numérique, dite FFT, sur l'axe distance sur ledit signal résultant, à chaque séquence correspondant à la durée d'une rampe d'émission (1) ;
   - effectuer la somme vectorielle des deux raies (61, 62) apparaissant aux fréquences δFd et δFdim en sortie de la FFT, après remise en phase de l'une par rapport à l'autre ;
   - effectuer une détection en comparant le module de la somme vectorielle avec un seuil prédéterminé.

2. Procédé selon la revendication 1, **caractérisé en ce que** pour effectuer la somme des raies (61, 62) on effectue la somme cohérente des sorties des filtres distance de la FFT sur l'axe distance de rang k et k+N - ∆F.Tr, N étant le nombre de points de la FFT sur l'axe distance.

3. Procédé selon l'une quelconque des revendications précédentes, **caractérisé en ce que** la fréquence d'échantillonnage du signal reçu (21) est choisie égale à la bande de modulation de la rampe d'émission ∆F (1) pour que par repliement les deux raies apparaissent dans le même filtre distance k.

4. Procédé selon l'une quelconque des revendications précédentes, **caractérisé en ce que** le nombre de périodes parcourues par le signal d'émission est entier pendant la durée de ladite rampe d'émission ∆F (1).

5. Procédé selon l'une quelconque des revendications précédentes, **caractérisé en ce que** le nombre de périodes parcourues par le signal d'émission étant entier pendant la durée de la rampe, et la fréquence d'échantillonnage étant égale à la bande de modulation de la rampe de fréquence (1), les deux sinusoïdes (51, 52) à la fréquence δFdim = (1 - (θ / Tr)).∆F et à la fréquence δFd = (θ/Tr).∆F se somment après FFT sur l'axe distance de façon cohérente dans le même filtre de rang k, sans aucune opération complémentaire d'association, de remise en phase ni de sommation.

6. Procédé selon la revendication 2, **caractérisé en ce qu'**une deuxième FFT Doppler de rampe à rampe est effectuée sur le signal reçu, après transformée de Fourier en distance, avant détection.

7. Procédé selon l'une quelconque des revendications précédentes, **caractérisé en ce que** la démodulation du signal reçu (21) par le signal émis (1) s'effectue directement dans le domaine hyperfréquence.

**8.** Procédé selon l'une quelconque des revendications 1 à 6, **caractérisé en ce que** la démodulation du signal reçu (21) par le signal émis (1) s'effectue dans le domaine numérique, après transposition en fréquence intermédiaire et après codage.

**9.** Procédé selon l'une quelconque des revendications précédentes, **caractérisé en ce qu'**une double démodulation du signal reçu (21) est effectuée, une première démodulation par le signal émis (1) et une deuxième démodulation par l'image du signal émis retardé.

**10.** Procédé selon la revendication 9, **caractérisé en ce que** le signal émis est retardé d'une demi-rampe.

**11.** Procédé selon l'une quelconque des revendications précédentes, **caractérisé en ce qu'**une levée d'ambigüité en distance est effectuée en répétant la séquence d'émission et de réception à l'aide d'une deuxième série de rampes, de durée élémentaire différente de Tr.

**12.** Procédé selon l'une quelconque des revendications 1 à 10, **caractérisé en ce qu'**une levée d'ambigüité en distance est effectuée en répétant la séquence d'émission et de réception à l'aide d'une deuxième série de rampes de durée élémentaire égale à Tr centrées sur une fréquence porteuse F2 différente de la fréquence porteuse F1.

**13.** Procédé selon l'une quelconque des revendications précédentes, **caractérisé en ce que** le radar fonctionnant en bande X, la fréquence donnée est sensiblement égale à 1 MHz.

**14.** Procédé selon l'une quelconque des revendications précédentes, **caractérisé en ce qu'**il est utilisé dans une fonction radar de détection et d'évitement d'obstacles, fonction dite « Sense & Avoid ».

**15.** Radar, **caractérisé en ce qu'**il met en oeuvre un procédé de détection selon l'une quelconque des revendications précédentes.

**Patentansprüche**

**1.** Radarortungsverfahren mit ununterbrochener Sendung, **dadurch gekennzeichnet, dass** die Übertragungsverzögerung für ein brauchbares Ziel, das sich in der maximalen Reichweite des Radars befindet, größer als die Dauer einer elementaren Rampe ist, wobei das Verfahren mindestens die folgenden Schritte umfasst:

- Erzeugen eines ununterbrochenen frequenzmodulierten Signals, wobei eine Sendefrequenz aus aufeinander folgenden und benachbarten Rampen (1) der Abwanderung $\Delta F$ und der Dauer Tr gebildet ist, die auf einer Trägerfrequenz F1 zentriert sind, wobei das Abwanderungsband $\Delta F$ und die Dauer Tr, derart fixiert sind, dass an der Grenze der Reichweite ($D_{max}$) die erhaltene Rampe um mindestens eine Frequenz versetzt erscheint, die mit Bezug auf die gesendete Rampe gegeben ist,
- gleichzeitiges und ununterbrochenes Empfangen eines Echos, von mindestens einem Ziel, das dem gesendeten Signal entspricht, verzögert um eine Hin- und Rück-Übertragungszeit am Ziel kTr + $\theta$, wobei k eine ganze Zahl und $\theta$ eine Dauer von weniger als Tr ist;
- Demodulieren des empfangenen Signals (21) durch das gesendete Signal (1), wobei das sich ergebende Signal für jede Senderampe aus einem ersten Abschnitt der Sinuskurve (51) mit der Frequenz $\delta Fdim = (1 - (\theta / Tr)).\Delta F$ und einer zweiten Sinuskurve (52) mit der Frequenz $\delta Fd = (\theta / Tr).\Delta F$ zusammengesetzt ist;
- Probenehmen an jeder Rappe, auf ununterbrochene Weise und gleichzeitig mit dem Sendesignal, das sich ergebenden Signals (51, 52), wobei der Anfang und das Ende jeder Probesequenz jeweils am Anfang und am Ende jeder Senderampe gewählt werden;
- Durchführen einer ersten digitalen Fourrier-Transformation, genannt FTT, auf der entfernten Achse auf dem sich ergebenden Signal, auf jeder Sequenz, die der Dauer einer Senderampe (1) entspricht;
- Durchführen einer vektoriellen Summe der zwei Linien (61, 62), die in den Frequenzen $\delta Fd$ und $\delta Fdim$ am Ausgang der FFT erscheinen, nach der Phasenrückstellung der einen mit Bezug auf die andere;
- Durchführen eines Nachweises durch den Vergleich des Moduls der vektoriellen Summe mit einer vorbestimmten Schwelle.

**2.** Verfahren nach Anspruch 1, **dadurch gekennzeichnet, dass** um die Summe der Linien (61, 62) durchzuführen, die kohärente Summe der Ausgänge der entfernten Filter der FFT auf der entfernten Achse des Bereichs k und k+N - $\Delta F.Tr$ durchgeführt wird, wobei N die Anzahl der Punkte der FFT auf der entfernten Achse ist.

**3.** Verfahren nach einem der vorhergehenden Ansprüche, **dadurch gekennzeichnet, dass** die Frequenz der Probenahme des empfangenen Signals (21) gleich dem Modulationsband der Senderampe $\Delta F$ (1) gewählt wird, so dass durch Faltung die zwei Linien im gleichen entfernten Filter k erscheinen.

**4.** Verfahren nach einem der vorhergehenden Ansprüche, **dadurch gekennzeichnet, dass** die Anzahl der von den Sendesignalen durchlaufenen Perioden während der Dauer der Senderampe $\Delta F$ (1) ganz ist.

**5.** Verfahren nach einem der vorhergehenden Ansprüche, **dadurch gekennzeichnet, dass** die Anzahl der von den Sendesignalen durchlaufenen Perioden während der Dauer der Rampe ganz ist, und die Probefrequenz gleich dem Modulationsband der Frequenzrampe (1) ist, wobei sich die zwei Sinuskurven (51, 52) mit der Frequenz $\delta Fdim = (1 - (\theta / Tr)).\Delta F$ und der Frequenz $\delta Fd = (\theta / Tr).\Delta F$ nach der FFT auf der entfernten Achse auf kohärente Weise im gleichen Filter des Bereichs k summieren, ohne einen zusätzlichen Assoziierungsvorgang, weder der Rückstellung noch der Summierung.

**6.** Verfahren nach Anspruch 2, **dadurch gekennzeichnet, dass** eine zweite Doppler-FFT von Rampe zu Rampe auf dem erhaltenen Signal durchgeführt wird, nach der entfernten Fourrier-Transformation, vor dem Nachweis.

**7.** Verfahren nach einem der vorhergehenden Ansprüche, **dadurch gekennzeichnet, dass** das Demodulieren des empfangenen Signals (21) durch das gesendete Signal (1), direkt in der Hyperfrequenz-Domäne erfolgt.

**8.** Verfahren nach einem der Ansprüche 1 bis 6, **dadurch gekennzeichnet, dass** das Demodulieren des empfangenen Signals (21) durch das gesendete Signal (1), in der digitalen Domäne erfolgt, nach dem Transponieren in eine Zwischenfrequenz und nach der Kodierung.

**9.** Verfahren nach einem der vorhergehenden Ansprüche, **dadurch gekennzeichnet, dass** ein doppeltes Demodulieren des empfangenen Signals (21) erfolgt, ein erstes Demodulieren durch das gesendete Signal (1) und ein zweites Demodulieren durch das verzögerte Bild des gesendeten Signals.

**10.** Verfahren nach Anspruch 9, **dadurch gekennzeichnet, dass** das gesendete Signal um eine halbe Rampe verzögert ist.

**11.** Verfahren nach einem der vorhergehenden Ansprüche, **dadurch gekennzeichnet, dass** eine entfernte Auflösung der Mehrdeutigkeit durch die Wiederholung der Sende- und Empfangsfrequenz mit Hilfe einer zweiten Reihe von Rampen mit einer elementaren Dauer, die verschieden von Tr ist, erfolgt.

**12.** Verfahren nach einem der Ansprüche 1 bis 10, **dadurch gekennzeichnet, dass** eine entfernte Auflösung der Mehrdeutigkeit durch die Wiederholung der Sende- und Empfangsfrequenz mit Hilfe einer zweiten Reihe von Rampen mit einer elementaren Dauer, die gleich Tr ist, zentriert auf eine Trägerfrequenz F2, die verschieden von der Trägerfrequenz F1 ist, erfolgt.

**13.** Verfahren nach einem der vorhergehenden Ansprüche, **dadurch gekennzeichnet, dass** wenn der Radar im X-Band funktioniert, die gegebene Frequenz im Wesentlichen gleich 1 MHz ist.

**14.** Verfahren nach einem der vorhergehenden Ansprüche, **dadurch gekennzeichnet, dass** es in einer Radarfunktion zum Nachweis und zur Vermeidung von Hindernissen verwendet wird, wobei die Funktion "Sense & Avoid" genannt wird.

**15.** Radar, **dadurch gekennzeichnet, dass** er ein Verfahren zum Nachweis nach einem der vorhergehenden Ansprüche durchführt.

**Claims**

**1.** A continuous-wave radar detection method, **characterised in that** the propagation delay for a useful target located within the maximum radar range is greater than the duration of an elementary ramp, said method comprising at least the following steps:

- generating a frequency modulated continuous signal, an emission sequence being formed by successive and contiguous ramps (1), of excursion $\Delta F$ and of duration Tr, centred on a carrier frequency F1, the excursion band $\Delta F$ and the duration Tr being fixed so that at the limit of the range ($D_{max}$) the received ramp appears shifted by at least one given frequency relative to the emitted ramp;

- simultaneously and continuously receiving an echo, from at least one target, corresponding to the emitted signal, delayed by a return-trip propagation time to said target kTr + $\theta$, with k being an integer and $\theta$ being a duration lower than Tr;

- demodulating the received signal (21) by the emitted signal (1), the resulting signal being made up of, for each emission ramp, a first sinusoid section (51) at the frequency $\delta Fdim = (1 - (\theta / Tr)).\Delta F$ and a second sinusoid section (52) at the frequency $\delta Fd = (\theta /Tr).\Delta F$;

- sampling on each ramp, continuously and synchronously with the emission signal, the resulting signal (51, 52), the start and the end of each sampling sequence being respectively selected at the start and at the end of each emission ramp;

- carrying out a first digital Fourier transform, called FFT, on the distance axis on said resulting signal, on each sequence corresponding to the duration of an emission ramp (1);

- carrying out the vector sum of the two lines (61, 62) that appear at the frequencies $\delta Fd$ and $\delta Fdim$ at the output of the FFT, after phase resetting one relative to the other;

- carrying out a detection by comparing the modulus of the vector sum with a predetermined threshold.

2. The method according to claim 1, **characterised in that**, in order to carry out the sum of the lines (61, 62), the coherent sum of the outputs of the distance filters of the FFT is carried out on the distance axis of rank k and k+N - $\Delta F.Tr$, with N being the number of points of the FFT on the distance axis.

3. The method according to any one of the preceding claims, **characterised in that** the sampling frequency of the received signal (21) is selected so that it is equal to the modulation band of the emission ramp $\Delta F$ (1) so that, by folding, the two lines appear in the same distance filter k.

4. The method according to any one of the preceding claims, **characterised in that** the number of periods covered by the emission signal is integral for the duration of said emission ramp $\Delta F$ (1).

5. The method according to any one of the preceding claims, **characterised in that** the number of periods covered by the emission signal is integral for the duration of the ramp and the sampling frequency is equal to the modulation band of the frequency ramp (1), the two sinusoids (51, 52) at the frequency $\delta Fdim = (1 - (\theta / Tr)).\Delta F$ and at the frequency $\delta Fd = (\theta / Tr).\Delta F$ are coherently added together after FFT on the distance axis in the same filter of rank k, without any additional association operation, for phase resetting or adding.

6. The method according to claim 2, **characterised in that** a second ramp-to-ramp Doppler FFT is carried out on the received signal, after Fourier transform by distance, before detection.

7. The method according to any one of the preceding claims, **characterised in that** the demodulation of the received signal (21) by the emitted signal (1) is carried out directly in the microwave field.

8. The method according to any one of claims 1 to 6, **characterised in that** the demodulation of the received signal (21) by the emitted signal (1) is carried out in the digital field, after intermediate frequency transposition and after coding.

9. The method according to any one of the preceding claims, **characterised in that** dual demodulation of the received signal (21) is carried out, a first demodulation by the emitted signal (1) and a second demodulation by the image of the delayed emitted signal.

10. The method according to claim 9, **characterised in that** the emitted signal is delayed by a half-ramp.

11. The method according to any one of the preceding claims, **characterised in that** distance ambiguity resolution is carried out by repeating the emission and reception sequence using a second series of ramps, with an elementary duration that differs from Tr.

12. The method according to any one of claims 1 to 10, **characterised in that** distance ambiguity resolution is carried out by repeating the emission and reception sequence using a second series of ramps of elementary duration equal to Tr centred on a carrier frequency F2 that differs from the carrier frequency F1.

**13.** The method according to any one of the preceding claims, **characterised in that**, with the radar operating in band X, the given frequency is substantially equal to 1 MHz.

**14.** The method according to any one of the preceding claims, **characterised in that** it is used in a radar detection and obstacle avoidance function, which function is called "Sense & Avoid".

**15.** A radar, **characterised in that** it implements a detection method according to any one of the preceding claims.

FIG.1

FIG.2

FIG.3

FIG.4

FIG.5

Fréquence normalisée (/Fech)

FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0903799
- FR 0904394
- US 4743910 A
- GB 577854 A